# EUROPEAN PATENT APPLICATION

(11) **EP 0 789 493 A1**
(43) Date of publication of application: **13.08.1997**
(21) Application number: 96907518.3
(22) Date of filing: 29.03.1996
(51) Int. Cl.: H04N 7/18, G08B 7/06

(54) **AUDIO-VIDEO SYSTEM FOR CONTROLLING THE ACCESS TO HOUSES AND THE LIKE**

(30) Priority: 03.04.1995 ES 9500661; 21.11.1995 ES 9502281; 15.03.1996 ES 9600641
(71) Applicant: Rodriguez Sanchez, Fernando, 28916 Leganes (ES)
(72) Inventor: Rodriguez Sanchez, Fernando, 28916 Leganes (ES)
(74) Representative: Cobas Barrios, Luis
(86) International application number: ES9600071
(87) International publication number: WO9631983

(57) **Abstract**

This system is formed by an existing conventional automatic entry-phone system, to which is added a video camera (1) connected to a conversion device (2) that mixes the signals from the building's communal aerial (20) with the signals generated by the video camera (1), such that both the former and the latter reach the television sets (24) in the diffetrent dwellings in the building, specifically the pictures recorded by the video camera via a special channel selected with a selector in the conversion device (2). At the same time, a transceiver set is installed in the entry-phone wiring vertical (25), this set being connected to a large number of wireless intercoms (8), at least one per dwelling. The intercoms are equipped with modulated frequency transmitters and receivers that permit audio communications in either direction, and also with a door-opener transmitter (14) and a door-opener receiver (19) as a result of which any wireless intercom (8) can be used to operate the electric door-opener and thus let people into the building.

## Description

### OBJECT OF THE INVENTION

The invention proposed herein consists of a new audio-video system, especially designed to replace the traditional system of "video entry phones" used as a means of controlling access to dwellings and similar, specifically of the type which, as far as the video part is concerned, use the television sets that already exist in the different dwellings or habitats of the building.

### BACKGROUND OF THE INVENTION

Apart from the traditional entry phones, which are based exclusively on audio communication between the porch and each of the dwellings, and in which an electric door-opener is obviously and unavoidably used to open the door after the individual or individuals who want to enter the building through the door have been identified, there are "video entry phones" which are becoming more widespread every day and which let users, directly from their home, to see the individual or individuals who want to enter the building on a small video monitor installed in an entry-phone system which, logically, can be used to talk to the aforementioned visitors. Thus, as well as the normal features of an entry phone, they offer a greater degree of security, avoiding the need to have to rely on the caller's very-often distorted or weak voice to decide whether or not to let him or her into the building, because the screen helps considerably to identify the person in question.

However, this solution poses two different problems: on the one hand, the cost involved in installing a TV monitor in each dwelling and, on the other, the fact that the TV screen is too small to appropriately show details that could be crucial, such as the number of people who are in the porch. Moreover, the video camera is always installed in the push-button panel, where it can easily be seen by the person who is being observed, who can therefore cover it or stand strategically so as not to be recognized. Moreover, the system cannot be used to record pictures, which may sometimes be of great interest.

However, the main drawback for the user lies mainly in the fact that the system is inconvenient, because to answer a call, wherever they are users have to go to their intercom with the corresponding monitor, as also occured with the traditional automatic entry-phone that was only equipped with audio transmission. Users can, if they wish, install more than one monitor in their home, but this unavoidably involves installation work, and consequently is more expensive, and users still have to go to wherever the monitors are located.

In an endeavour to solve the aforementioned problems, control systems have bene invented that, instead of using special video monitors, use the television sets that already exist in the dwellings, also making use of the distribution network of the building's communal aerial. Although this solution does bring down costs considerably due to the fact that there are no special monitors or fitting works are required, it fails to solve the aforementioned problems and poses further, additional problems, such as the fact that in certain systems, when the entry-phone is used the television set is automatically switched on, which somtimes is not desirable; that the same action means that the TV set changes channels when it is being watched, meaning that it might interrupt an interesting programme, etc., in addition to the installation problems derived from the need to search, *in situ*, for a free frequency channel for use by the system.

### DESCRIPTION OF THE INVENTION

The audio-video system for controlling access to dwellings described herein, which is also based on the idea of using the TV sets that already exist in the different dwellings in the building as video media, fully and satisfactorily solves each and every one of the aforementioned aspects of the said problems.

Therefore, and more specifically, the main system proposed herein, based on the existence in a building of a conventional automatic entry-phone, such as exists in any building, and of the corresponding communal aerial, is characterized in that a transceiver set is installed in the entry phone wiring vertical. This set consists of a modulated frequency trasmitter, a modulated frequency receiver, and a door-opener receiver that acts upon the electric door-opener fitted in the building door. This set is linked to at least one wireless intercom per dwelling, each of which is in turn equipped with a modulated frequency receiver with its corresponding loudspeaker, a modulated frequency transmitter with its corresponding microphone and a door-opener transmitter with its corresponding button. The wireless intercoms are correctly tuned to the same frequency as the transceiver set.

Obviously, in each dwelling there can be as many wireless intercoms as deemed appropriate because they require no installation, and can be distributed appropriately so that there is always one in reach.

To supplement the structure described above, the system also includes a video camera, strategically positioned in the building porch and connected to a converter circuit that is equipped with an modulator stage, an amplifier stage, a mixer stage and a channel selector. With the channel selector it is fast and easy to choose, for a distribution network from the communal aerial, a specific channel for the TV sets existing in the different dwellings, which can be used to see the pictures recorded by the video camera, but only when users, after receiving the signal from the push-botton plate installed in the porch, and after establishing or failing to establish contact with the visitor via the wireless intercom, decide that they want to see the individuals or individuals in question. If they do so, they can use any of the TV sets in the dwelling, and in particular the specific channel established for that purpose in the TV set: if they wish, they can also record the picture on their video tape recorder, connected to their TV set.

In the embodiment, it will be possible to modify the audio part of the system, keeping the video part unchanged, removing the aforementioned transceiver set from the entry-phone wiring vertical and installing a new device in each dwelling, such device being known as the "wall-set", which serves the same function as the removed transceiver set, i.e., it permits communication with the entry-phone panel, together with internal communications with the wireless intercom or intercoms, and external telephone communications. Consequently, not only must this device be connected to the entry phone wiring vertical, but to the telephone network.

For this purpose, the wall-set, which replaces the traditional intercom phone installed in each dwelling, consists of a modulated frequency receiver, a modulated frequency receiver and a door-opener transmitter, as well as any other devices required for telephone communications, just as if it was a "hands-free" type telephone, meaning that users do not have to pick up the phone to use it. As in the main patent, this set also includes at least one wireless intercom per dwelling, in turn equipped with a modulated frequency receiver with its corresponding microphone and a door-opener transmitter with its corresponding push-button, which now also incluides a dial pad. The wireless intercoms are correctly tuned to the same frequency as the transceiver set.

In a second embodiment of the invention, it will be possible to modify the entry phone panel and audio part of the system, keeping the video part unchanged. The entry phone panel has been designed in such a way that all the connections and communications (audio, call and opening) can be made by radiofrequency, i.e., there is no need for wiring. It is also planned that it will be fully modular, consisting of four very different modules: camera module, phone module, display module and keypad module, thus facilitating both operation of the system and maintenance thereof.

The audio part will consist of a receiver, located at any point within the building, connected in turn to the panel by specific wiring, or simply installed directly in the panel itself, that permits radiofrequency full-duplex two-way communications between a wireless intercom and the said receiver. It also makes it possible to open the door and receive the call from the intercom.

Furthermore, as a result of the multichannel design within the band of authorized frequencies, the audio, call and opening channel can be chosen without causing any inteference whatsoever with any other facilities adjoining the system or with other systems of different applications.

### DESCRIPTION OF THE DRAWINGS

A set of drawings have been enclosed with this specification, of which they form an integral part, in order to supplement this specification and make it easier to understand the characteristics of the invention. These drawings, which are provided for the purposes of illustration and are by no means of a limiting nature, show the following:
Figure 1 is a schematic diagram of a audio-video system for controlling access to dwelling and similar, embodied in accordance with the object of this invention.

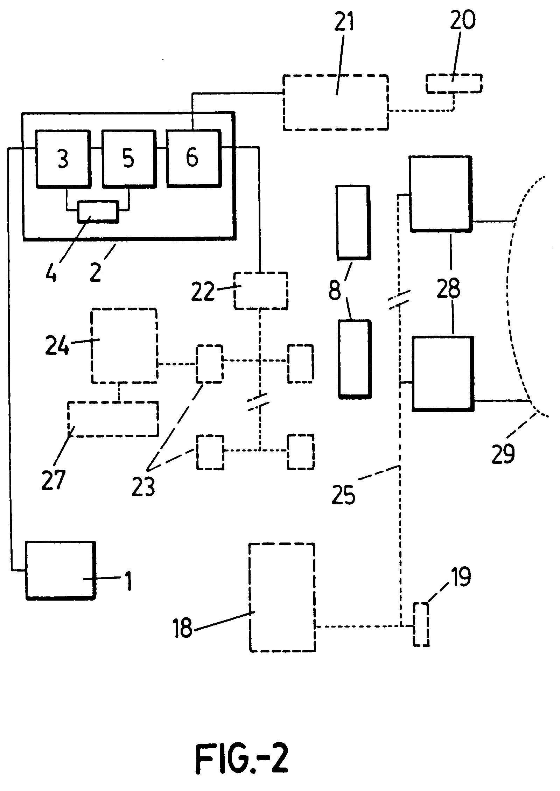

Figure 2 is a schematic diagram of the system, according to the first embodiment and which, for the purposes of simplification, only shows two wall sets. Evidently, in practice this number will be considerably larger.
Figure 3 is also a schematic diagram of the structural details of one of the wall sets with its corresponding wireless intercom.
Figure 4 is a diagram of the entry phone panel, in accordance with a second embodiment of the invention.
Figure 5 is a diagram of the installation, showing the new elements included as per the said second embodiment.

### PREFERABLE EMBODIMENT OF THE INVENTION

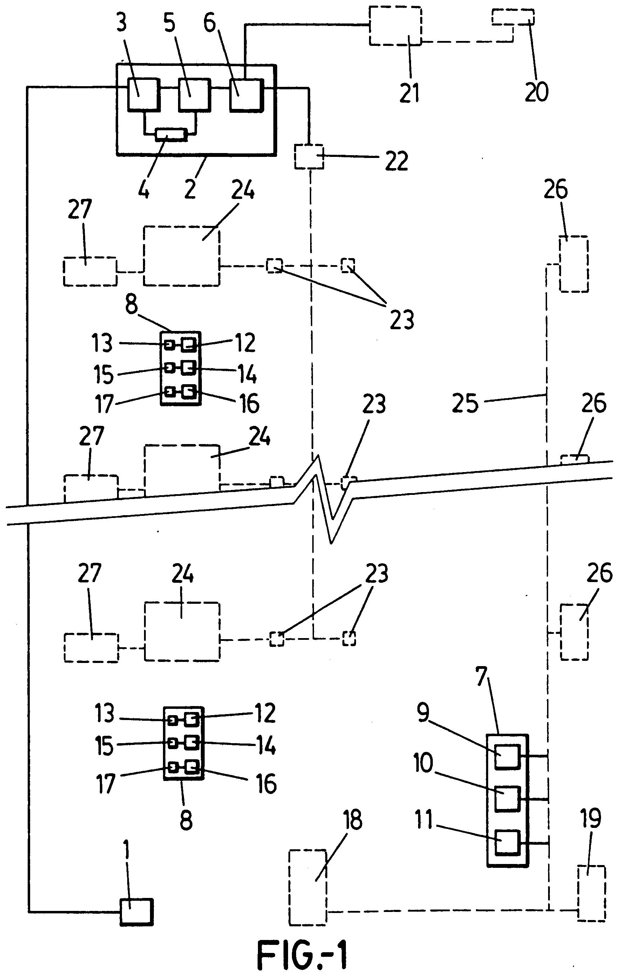

In Figure 1, the broken line represents the elements that already exist in any building where the system is to be installed, while the thick solid line represents the added components that convert the conventional audio-video system into an audio-video system that forms the purpose of this invention.

In Figure 1, item (1) is the video camera that is used to record the building porch. The output signal ia connected to the video input of a conversion device (2) that consists of several stages, namely a modulating stage (3) that converts the video signal into a modulated radiofrequency signal in the television channel selected with the aid of a channel selector (4), which also forms part of the said conversion device (obviously the said channel will be one that is not used in the building by television transmitters); an amplifier stage (5) that raises the signal to the level necessary for the number of user sockets, and the last stage, the mixing stage (6), that merges the signal obtained from the conversion device with the existing television signals from the aerial (20), which have already passed through the traditional amplifying station (21).

In this way, and without affecting any of the existing signals, the system adds a channel that shows the picture of the porch which, like the other television channels, branches off via the distribution box (22) to all the user sockets (23) in the building, so that any television set (24) that is connected to it not only receives the channels from the aerial (20), but also this additional channel from the conversion set (2), which conveys the picture of the porch recorded by the video camera (1).

Furthermore, to facilitate spoken communication between the users of the set, who are in their dwelling, and the visitor, who is calling from the porch, a transceiver set (7) is installed in an appropriate part of the vertical wiring (25) of the building's traditional automatic entry-phone system that connects the push-button panel (18) in the porch to the intercom phones (26) installed in each dwelling, and which also includes the necessary electric door-opener (19) that can be operated from any intercom phone (26). There will be at least one wireless intercom (8) in each dwelling in the building.

More specifically, the transceiver set (7) consists of a modulated frequency transmitter (9), a modulated frequency receiver (10) and a receiver (11) for the signals that activate the door-opener (19). Similarly, each wireless intercom (8) is fitted with a modulated frequency receiver (12), with its corresponding loudspeaker (13), a door-opener transmitter (14), with its corresponding button (15), and a modulated frequency transmitter (16), with its corresponding microphone (17). As is to be expected, the transmitter (9) of the transceiver set (7), at a sightly different frequency to the former, estblishesd the inverse direction of communication when it receives the speech from the transmitter (16) of the wireless intercom (8), while obviously the door-opener receiver (11) in turn receives the signals generated by the door-opener transmitter (14) from the aforementioned wireless intercom (8).

In accordance with the structure described above, the system works as follows: when the visitor reaches the porch and presses one of the buttons on the panel (18), the intercom phone (26) rings in the house receiving the call. All that the user has to do is to tune the television set to the right channel in order to see the picture of the porch. If the user does not know who wants to enter the building by simply looking at the individual in question, he can use the wireless intercom (8), which will link up with the transceiver (7) in order to talk to the visitor, who can listen and talk to the user va the push-button panel (18). If and when the user decides to open the door, he only has to push the button (15) on the wireless intercom (8) to activate the electric door-opener (19) and let the person in.

The video part of the system is separate from the audio or automatic entry-phone part, so the small video camera does not have to be located in the push-button panel. Instead it can be located wherever considered most suitable, either inside our outside the porch, but as concealed as possible and installed in such a way as to make it difficult to steal or destroy. The system can be combined with other security options, such as using more than one camera to monitor other doors or places, or installing warning alarms, etc. Moreover, the fact that the picture is displayed on the television screen means that more than one person can view the picture to decicde whether or not to let the person into the building. Installation of the system does not involve entering the dwellings or performing any building work inside them, as occurs with the traditional "automatic entry-phone" systems, and once the system has been installed, all the television sets that are connected to the communal aerial will be able to receive the picture of the porch. Therefore the cost does not depend on the number of people or apartments in the building, or on the number of television sets in each dwelling, as happens with other security systems.

Lastly, it should be mentioned that in new installations, in other words, buildings that are being constructed, a slightly modified "hands-free" can be installed. This device is equipped with a push-button, as a result of which it can be used both as a "hands-free" and as a intercom phone.

In accordance with the first embodiment, the video signal support structure remains intact while changes are made to the audio section, namely that each intercom phone (26), conventionally used for spoken communications between the user of the phone, in his house, and the visitor, calling at the door, is replaced by a wall-set (28) that is connected, as occurred with the former (26), to the automatic entry-phone wiring vertical (25), thus making it possible to communicate with the push-button panel (18) in the porch, and to operate the necessary door-opener (19). The special feature is that this wall set (28), due to its new, supplementary function, is also connected to the telephone network (29) just like any other telephone handset, and thus can also be used for outside communications. Each dwelling will still have at least one wireless intercom (8).

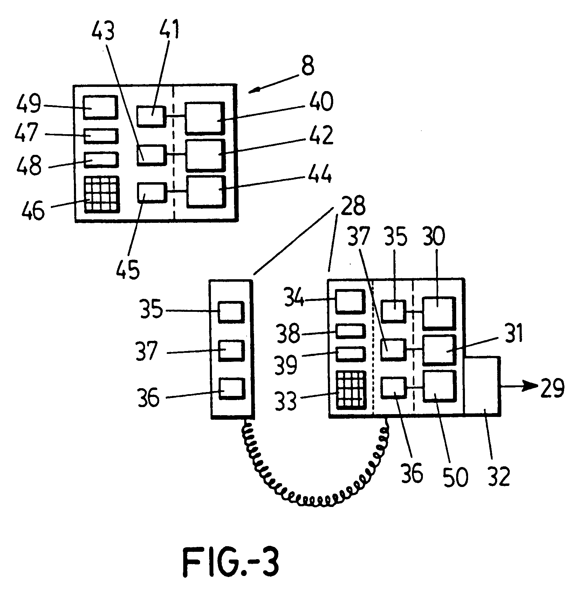

Figure 3 is a more detailed diagram of the wall set (28) and of the correspopnding wireless intercom (8).

More specifically, the said wall set (28) is equipped with a modulated frequency transmitter (50), a modulated frequency receiver (30) and a receiver for the door-opener (31) activating signals, as well as a telephone network connection (32), a dial pad (33), an buzzer (24), and the audio and opening transducers, namely the loudspeaker (35), microphone (36) and door-opening button (37). These latter elements can either be fitted inside the set for "hands-free" use, or else connected externally in an intercom phone wired to the wall set (28), or permitting both options at the same time, as displayed by the said Figure 3. In view of the different functions permitted by the full set, a function selector (38) and an enabled function indicator (39) must also be included.

At the same time, each of the intercom phones (8) is equipped with a modulated frequency receiver (40), with its corresponding loudspeaker (41), a door-opener transmitter (42) with its corresponding button (43), and a modulated frequency transmitter (44) with its corresponding microphone (45), as well as a dial pad (46), function selector (47), enabled function indicator (48) and buzzer (49). The transmitting and receiving frequencies differ slightly: the transmitter (50) of the wall-set (28) is tuned to the receiver (40) of the latter and the receiver (30) of the former (30).

Thus, communication takes place between the wireless intercom (8) ad the wall-set (28), whenever necessary, this being chosen via the function selectors (38) and (47).

In accordance with the structure described above, the modes of operation of the system are as follows: when someone wants to establish internal communbication between the wall-set (28) and the wireless intercom (8), or vice-versa, the user making the call uses the function selector on the appropriate device, switching it to "intercom", which will be shown on the indicator as being enabled, and uses the dial pad to call the other device, which will ring, and the origin of the call (intercommunication) will also be shown on the enabled function indicator. The person being called must turn the function selector to the right position and can then start to talk to the other person. In this case, sound is transmitted by the microphones and loudspeakers of the devices, and the wall-set (28) prevents the sound from being heard on the outside via the automatic entry-phone or telephone network.

When a visitor reaches the porch and presses one of the buttons on the panel (18), the wall-set (13) of the house receiving the call rings. All that the user has to do is to tune the television set (24) into the right channel in order to see the picture of the porch. If the user does not know who wants to enter the building by simply looking at the individual in question, or if the television set is not switched on, he can use the wireless intercom (8) by selecting the "automatic entry-phone" function. The wall-set (28) will be linked up with the visitor, who can listen and talk to the user via the push-button panel (18). If and when the user decides to open the door, he only has to push the button on the wireless intercom (8) to activate the electric door-opener (19) and let the person in. If the user finds it easier, he can also perform this sequence of actions from the wall-set (28), so there no link will be established between the wall-set and the intercom, because the user will have used the function selector to choose the automatic entry-phone.

Hoewever, if users wants to make a telephone call, they must select that function (either on the wireless intercom (8) or the wall-set (29) in order to use the dial pad (33) or (46), so that the wall-set (28) only establishes communication wth the telephone network via the connection socket (32). If the call is made from the wall-set, once again the radio-link with the wireless intercom is no longer used.

When a call is receved via the connection socket (32), it is the wall-set (28) that rings, but the call can be answered either from the wall-set or from the wireless intercom (8) by switching the function selector in question to the right position. The wireless intercom is also equipped with a buzzer (49) for this purpose. In the latter case, a link is established between the transmitters and receivers that form the system.

Overall the system is easy-to-use and safe, bringing together all a household's communication requirements at a single point, and especially very cheap, due fundamentally to the fact that it makes the best use possible of the resources that already exist in any modern dwelling, specifically the communal aerial and the automatic entry-phone, contributing a great measure of added value.

Attention must be drawn to the fact that the system is also valid for any type of telephone and/or automatic entry-phone signal support media, including optic fibres, which will obviously permit communications of far higher quality.

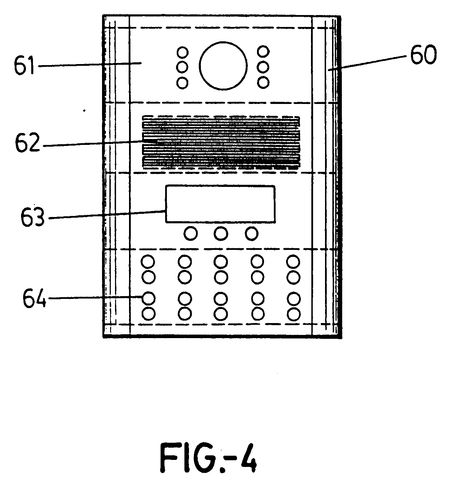

In accordance with the second embodiment of the invention, Figure 4 shows that the automatic entry-phone panel (60) is formed by four very different modules, each one having its own specific function: a camera module (61), a phone module (62), a display or information module (63) and a key pad module (64). These modules permit interaction with the rest of the system when it is operated by a visitor who wants to enter the building that is controlled by the system.

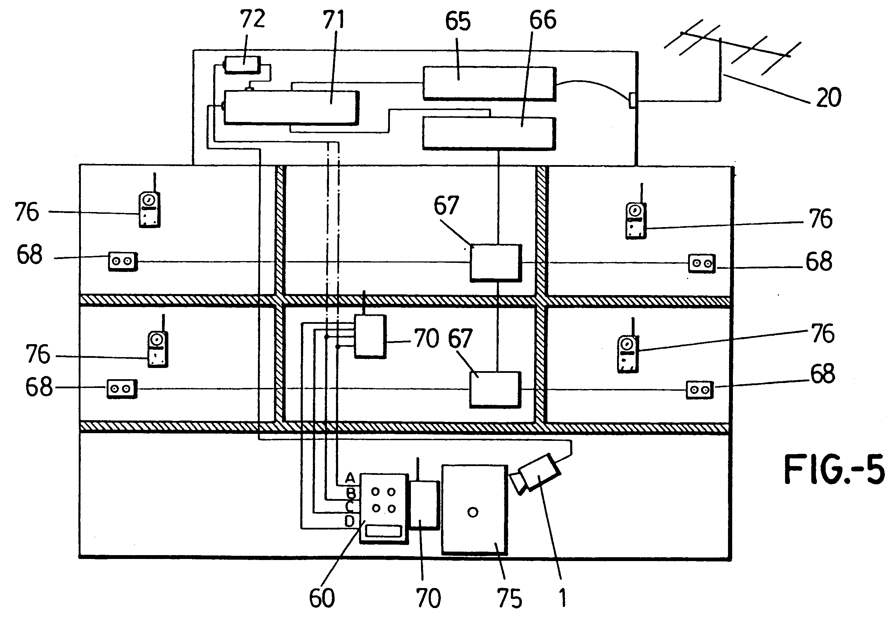

Figure 5 shows the structure of the new panel (60) and the transmitter (70) included in the audio-video system for controlling access to dwellings and similar, proposed as improvements to this system, within a construction. The components of the communal aerial system are an aerial (20), the signal of which is amplified in an amplifying station (65) and then passed via a television signal distributor (66) to the different dwellings by means of distribution boxes (67) to the modulated frequency television sockets (68).

The system participates in this distribution by including a modulator (71) between the amplifying station (65) and the television signal distributor (66), which inserts into the channel the video and audio signals that it receives when it is operated, and after the audio signals have passed thorugh an audio amplifier (72) conected to the operating elements themselves installed in the automatric entry-phone panel (60) or, in the case of the receiver, installed anywhere in the building. In this case, they are connected to the panel (60) by four different wires: common (A), microphone (B), opening (C) and loudpseaker (D). The video signal is supplied by a television camera (1) that records whatever is happening at the main door (15), and which forms part of the camera module (61).

In order for the system to work, users must have another device, namely the wireless intercom (76). By applying the improvements that have been made, the system has been simplified considerably, and practically only involves using an intercom that integrates all the communication and action devices.

## Claims

1. Audio-video system for controlling access to dwellings and similar which, being especially designed for installation in dwellings already equipped with an automatic entry-phone system, with a push-button panel (18) located in the porch and a set of intercom phones (26) located in the respective dwellings, as well as a system that distributes the signals from a communal aerial (29) to a series of aerial sockets (23), located in the different dwellings and to which are connected television sets (24), optionally connected to video recorders (27) and being of the type of systems that use a video camera (1) to make it possible to see the visitors on the television sets (24), is esentially characterized in that the said video camera (1) is connected to a conversion device (2) equipped with a modulator stage (3), a channel selector (4), an amplifier stage (5) and a mixer stage (6), the latter being responsible for merging the signal obtained from the conversion device (2) with the existing television signals from the communal aerial (20) through a conventional amplifying station (21), such that the picture recorded by the video camera (1) in the porch of the building can be seen via any of the aerial sockets (23) and on the specific channel established for such purpose by the channel selector (4). In addition to this video circuit, a transceiver set (7) will be installed in a suitable site of the entry-phone wiring vertical (25), such set being connected to the push-button panel (18) and to the electric door-opener (19) of the existing automatic entry-phone system, and such transceiver set (7) being accompanied by at least one wireless intercom (8) in each of the dwellings of the building, such that the said transceiver set (7) can be used to establish audio communications between the wireless intercom (8) and the push-button panel (18) installed in the building porch, and which also send the corresponding signal to the electric door-opener (19).

2. Audio-video system for controlling access to dwellings and similar, in accordance with claim 1, characterized in that the the transceiver set (7) consists of a modulated frequency transmitter (9), a modulated frequency receiver (10) and a door-opener receiver (11), while each wireless intercom (8) in turn consists of a modulated frequency receiver (12), with its corresponding loudspeaker (13), a modulated frequency tranmsmitter (16) with its corresponding microphone (17), and a door-opener transmitter (14) together with an operating button (15), the transmitter (9) of the transceiver set (7) being appropriately tuned to the receiver (12) of the intercom (8), the receiver 10) of the former tuned to the transmitter (16) of the latter, and the door-opener receiver (11) of the former tuned to the door-opener transmitter of the latter.

3. Audio-video system for controlling access to dwellings and similar, in accordance with claim 1, characterized in that in the audio section of the general transceiver set for the whole building, each of the intercom phones (28) can be replaced, optionally, by a wall-set (28), together with one or more wirless intercoms, with the special feature that, in addition to permitting communication with the building's traditional push-button panel (18) and with the door-opener (19), via the automatic entry-phone wiring vertical (25) and with the wireless intercom (8), the said wall-set can also be used to communicate outside the building, via the telephone network, as if it were a conventional teleophone handset.

4. Audio-video system for controlling access to dwellings and similar, in accordance claims 1 and 3, characterized in that the wall-set (28) is equipped with a modulated frequency transmitter (5), a modulated frequency receiver (30) and a receiver (31) for the door-opener (19) activating signals, and also with an element (32) that connects it to the telephone network (19), a dial-pad (33), a buzzer (34), the necessary audio transducers, loudspeaker (35) and microphone (36) and an opening transducer in the form of a push-button (37).

5. Audio-video system for controlling access to dwellings and similar, in accordance with claims 1 and 3, characterized in that the said audio and opening transducers (35), (36) and (37) can be installed inside the device for "hands-free" operation, either connected externally to an intercom phone wired to the wall-set (28) or else permitting both options at the same time, a device that includes a function selector (38) and an enabled function indicator (39).

6. Audio-video system for controlling access to dwellings and similar, in accordance with claims 1 and 3, characterized in that each wireless intercom (8) includes, as well as a modulated frequency receiver (40), with its corresponding loudspeaker (41), a door-opener transmitter (42), with its corresponding push-button (43) and a modulated frequency transmitter (44) with its corresponding microphone (45), a dial-pad (46) to supplement the wall-set pad (28), a function selector (47) and an enabled function selector (48).

7. Audio-video system for controlling access to dwellings and similar, in accordance with claim 1, characterized in that, optionally, the automatic entry-phone panel (60) is formed by four very different modules, each one having its own specific function: a camera module (61), a phone module (62), a display or information module (63) and a key pad module (64). There will also be a receiver (70), installed in the panel (60) or anywhere in the building, to permit two-way communications with and also between the different wireless intercoms (76).

8. Audio-video system for controlling access to dwellings and similar, in accordance with claims 1 and 7, characterized in that it includes a modulator (71) between the amplifying station (65) and the television signal distributor (66), which inserts into the channel the video and audio signals that it receives when it is operated, after the audio signals have passed through an audio amplifier (72) connected to the operating elements themselves installed in the automatic entry-phone panel (60).
